# EUROPEAN PATENT SPECIFICATION

(11) **EP 3 545 181 B1**
(45) Date of publication and mention of the grant of the patent: **22.04.2020**
(21) Application number: 17849905.9
(22) Date of filing: 08.09.2017
(51) Int. Cl.: F01P 7/16, G05D 23/13

(54) **THERMOSTAT ASSEMBLY WITH TANDEM THERMAL ACTUATOR**
THERMOSTATANORDNUNG MIT TANDEMWÄRMEAKTUATOR
ENSEMBLE THERMOSTAT À ACTIONNEUR THERMIQUE TANDEM

(30) Priority: 22.11.2016 TR 201616963
(43) Date of publication of application: 02.10.2019
(73) Proprietor: Kirpart Otomotiv Parçalari Sanayi Ve Ticaret A.S., Bursa (TR)
(72) Inventor: ÜNLÜASLAN, Faruk, Nilüfer/Bursa (TR)
(74) Representative: Kaya, Erdem
(86) International application number: PCT/TR2017/050417
(87) International publication number: WO 2018/097811

(56) References cited:
- DE-A1- 1 451 669
- DE-B- 1 041 301
- GB-A- 2 335 966
- US-A- 4 193 542

## Description

### TECHNICAL FIELD

The invention relates to a thermostat assembly which is used in cooling circulation units of internal combustion engines, inside which wax based thermal actuators are used as main controllers.

### PRIOR ART

Thermostat assemblies are main control devices of the internal combustion engines. In today's technology, wax based actuators are most prevalent component of thermostat assemblies.

There are two common types of wax based actuator according to sealing method: Diaphragm type sealing wax based actuators and annular type sealing wax based actuator.

Diaphragm type seals are placed inside of the wax based actuators between the vessel and cover structure and encage the wax compound inside of the vessel besides guide the piston by enwrapping. Annular types seals are ring shaped inside which the piston passes through. Annular type seal and piston are encaged inside of the vessel by means of cover.

Diaphragm type sealed actuators are more leak-proof than annular type sealed ones since wax compound is fully isolated by means of diaphragm type seal. There is no contact between wax compound and piston or something else except seal differing from the annular type one that piston contact with wax compound.

In case long stroke is needed, annular type seal is first option. However is has some leaking problems under high pressure. In order to extend the stroke of thermal actuator, length of the diaphragm type seal should also be extended. However to extend the length of diaphragm and vessel accordingly requires seal and vessel designs and production investments within the bounds of applicability limits.

EP1372054 is related a regulating valve. Said regulating valve has housingfitted with regulating capsule with 2 thermostat elements controlled by circulated water temperature, for opposing adjustment of 2 regulating pistons,cooperating with valve seat ring with flow opening between entry and exit channels of valve housing, for regulation of water flow rate for disinfection of circulation system at water temperature of between 70 and 75 degrees C. A setting device allows pre-setting of the upper regulating piston for selection of the required water temperature with a maximum water flow rate. A thermostat presenting a capsule with two thermal elements is shown in GB2335966.

### BRIEF DESCRIPTION OF THE INVENTION

The present invention relates to a thermostat assembly which has wax based actuators so as to eliminate the disadvantages mentioned above.

An object of the present invention is to provide long stroke wax based actuator with diaphragm type sealed actuator.

In order to realize all of the abovementioned objects and the objects which are to be deducted from the detailed description below, the present invention a thermostat assembly developed for use in the cooling circuits of internal combustion engines and comprising a thermal actuator having at least one thermal element comprising a thermally sensitive component encapsulated inside a vessel, a cover positioned on said vessel and a piston provided in a manner movable outwardly from the inner section of said cover. Accordingly, the present invention is characterized by comprising a bushing capsule wherein at least two thermal elements are placed back to back in opposite directions and which at least partially encircles the thermal elements. Thus, by means of the activation of the thermal elements, each piston moves outwardly from each thermal element in an opposite direction with respect to each other and thereby two times longer stroke can be obtained in the thermal assembly.

In a preferred embodiment of the subject matter invention, characterized in that said thermal elements are placed into said bushing capsule in a shrink fit manner. Thus, thermal actuators are fixed in the bushing capsule.

In another preferred embodiment of the subject matter invention, characterized in that said bushing capsule and said thermal elements directly contact each other. Thus, heat transmission can be provided from bushing capsule to thermal element.

According to the invention, the thermal assembly comprises at least three protrusions embodied in a manner centering the thermal elements on the inner surface of said bushing capsule.

In another preferred embodiment of the subject matter invention, characterized in that said thermal elements contact at least three protrusions.

In another preferred embodiment of the subject matter invention, characterized in that said protrusions extend at least along the length of the bushing capsule.

In another preferred embodiment of the subject matter invention, characterized by comprising three gaps defined between the protrusions and the bushing capsule and allowing fluid flow. Thus, response time has been reduced.

In another preferred embodiment of the subject matter invention, characterized by comprising a valve wherein the thermal actuator is placed and connected to a spring from one side.

In another preferred embodiment of the subject matter invention, characterized by comprising a guiding hole embodied on said valve and which guides the thermal actuator.

In another preferred embodiment of the subject matter invention, characterized by comprising a support hole embodied on the valve connected to the piston provided on the thermal actuator.

In another preferred embodiment of the subject matter invention, characterized by comprising at least three tie pieces which engage the guiding hole, the support hole and the outer surface of the valve to each other.

### BRIEF DESCRIPTION OF THE FIGURES

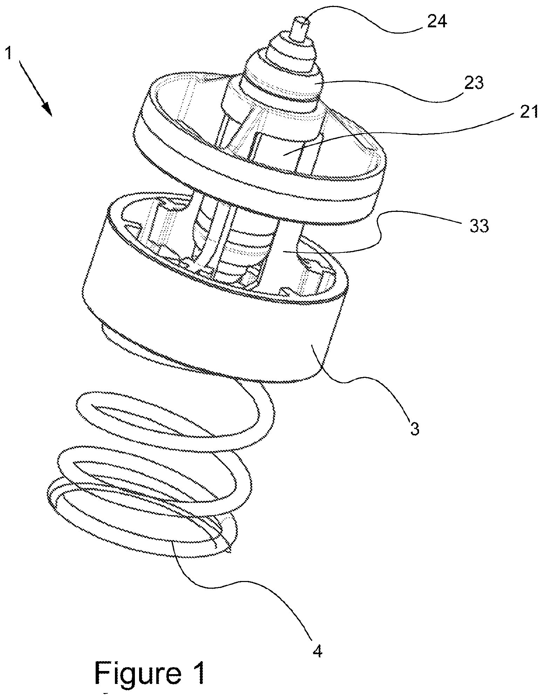

- **Figure 1**: 3D view of thermostat assembly with tandem thermal actuator

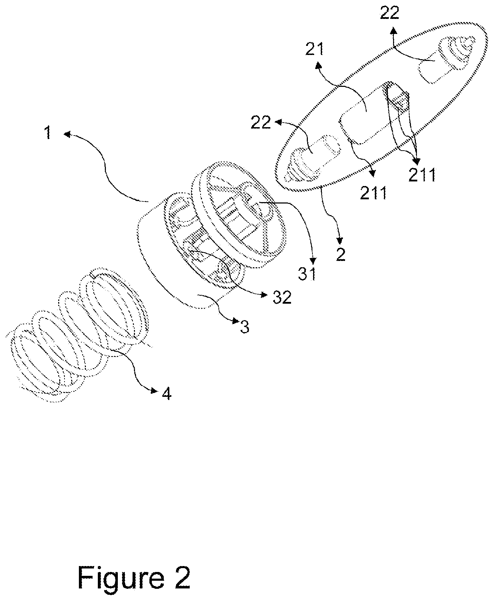

- **Figure 2**: Exploded view of thermostat assembly with tandem thermal actuator

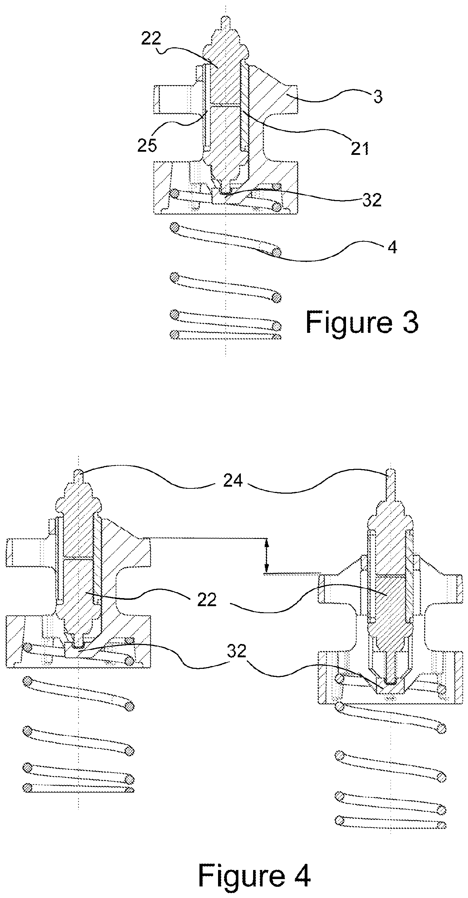

- **Figure 3**: Cross section view of thermostat assembly with tandem thermal actuator
- **Figure 4**: Cross section view of long stroke tandem thermal actuator showing the stroke

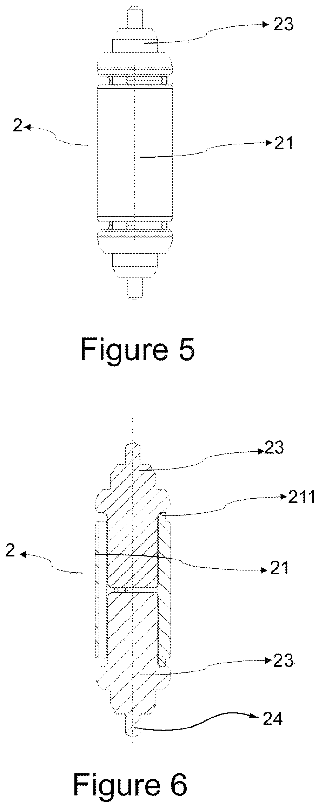

- **Figure 5**: 3D view of thermal actuator
- **Figure 6**: Cross section view of thermal actuator

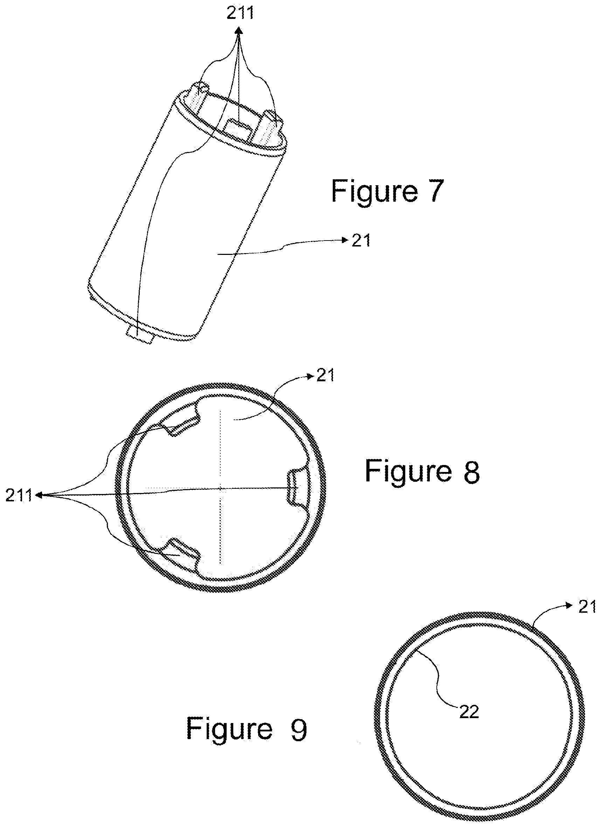

- **Figure 7**: 3D view of bushing capsule
- **Figure 8**: Top view of bushing capsule with protrusions
- **Figure 9**: Top view of bushing capsule without protrusions

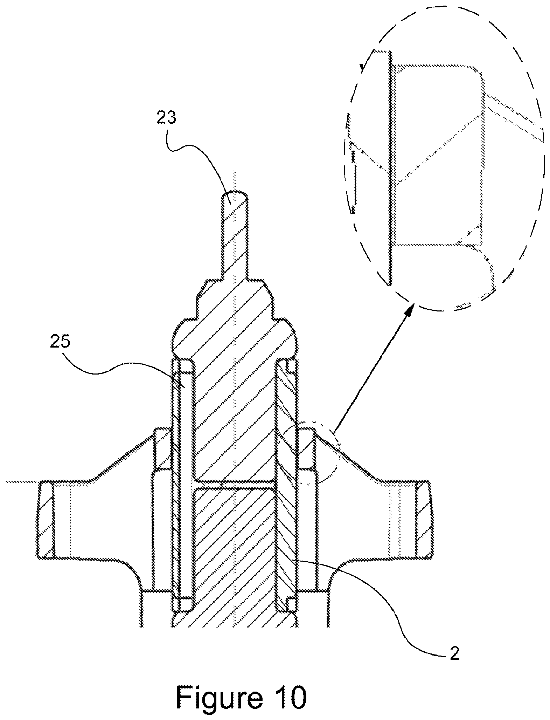

- **Figure 10**: Cross section view of long stroke tandem thermal actuator showing the clearance between the bushing capsule and contacting surface of guiding hole of valve

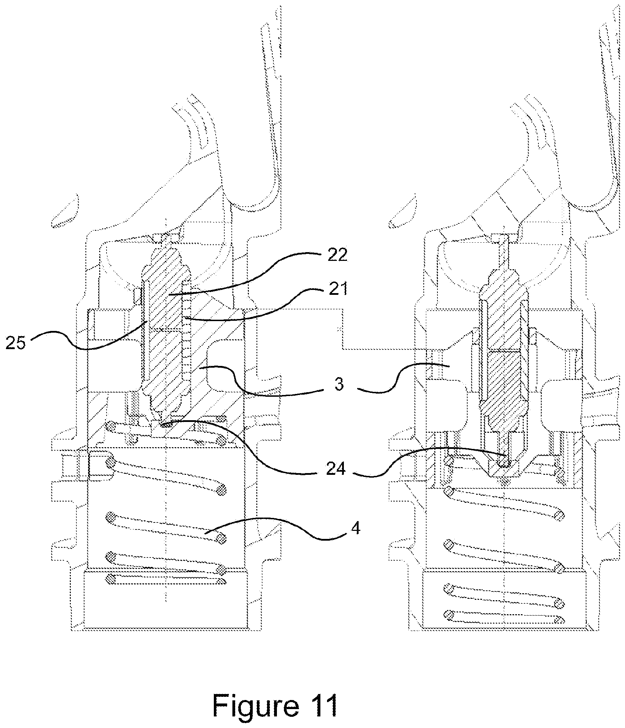

- **Figure 11**: Another cross section view of long stroke tandem thermal actuator showing the stroke

### REFERENCE NUMBERS

- 1: Thermostat assembly
- 2: Thermal actuator
21 Bushing capsule
211 Protrusion
22 Thermal element
23 Cover
24 Piston
25 Gap
- 3: Valve
31 Guiding hole
32 Support hole
33 Tie pieces
- 4: Spring

### DETAILED DESCRIPTION OF THE INVENTION

In this detailed description, the subject matter thermostat assembly (1) with thermal actuator (2) is explained without forming any restrictive effect only in order to make the subject more understandable. Said thermostat assembly (1) is used in cooling circulation system of internal combustion engines.

Said thermostat assembly (1) comprises a thermal actuator (2); a valve (3) wherein said thermal actuator is at least partially placed from one side and a spring (4) which is positioned to other side of said valve (3).

The tandem thermal actuator (2) comprises at least two thermal elements (22) and a bushing capsule (21). Two thermal elements (22) are positioned back to back inside said bushing capsule (21). Thermal elements (22) are control devices of thermostat assembly (1) with thermal actuator (2) inside which thermal elements (22) are tandem placed. Each thermal element (22) comprises a cover (23) and a piston (24) which extend from inside to outside of said cover (23). A thermally sensitive compound captured inside the thermal elements (22) expands or shrinks according to the temperature and said thermally sensitive compound triggers piston (24) movement. The expansion creates a lift force for the thermal elements (22). This force starts to drive the piston (24). In a similar manner, during the shrinkage the force starts to decrease and the valve (3) is driven by the spring (4) in case the force of the thermal elements (22) is smaller than the force of the spring (4).

Bushing capsule (21) has a hollowed cylindrical geometry. Bushing capsule (21) is made of a heat conductive material, preferably metal, so that proper heat transfer from coolant to thermal elements (22) is improved.

In one embodiment of present invention; thermal elements (22) are positioned into bushing capsules (21) in a shrink fit manner. In this embodiment, outer surface of thermal elements (22) directly contact inner surface of bushing capsules (21).

In another embodiment of present invention; at least 3 protrusions (211) are on the inner surface of the bushing capsule (21). Said protrusions (211) extend along the inner surface of bushing capsule (21). thermal elements (22) are located between said 3 protrusions (21) in a shrink fit manner in bushing capsule (21). Thermal elements (22) inside the bushing capsule (21) are provided to be coaxial by means of protrusions (211). Thus, at least three gap (25), allowing liquid flow, has been obtained between the thermal element (22) and bushing capsule (21). By means of this, thermal element (22) directly contacts cooling liquid and response time of the thermal actuator is reduced. Preferably, protrusions (211) are longer than bushing capsule (21) and protrude from both ends of bushing capsule (21).

The valve (3) helps controlling the flow by means of movement of the tandem thermal actuator (2) structure. It has two hollowed cylindrical geometry engaged each other by means of tie pieces (33). There is a guiding hole (31) which is also a hollowed cylinder and which's outer diameter is smaller than the inner diameter of valve (3) and which is located above upper part of the valve (3) axis. Guiding hole (31) provide a coaxial movement for the valve (3). Valve (3) and guiding hole (31) are engaged by means of preferably at least 3 tie pieces (33) placed equiangular.

Inner diameter of the guiding hole (31) is greater enough than the diameter of tandem thermal actuator (2) structure to allow the tandem thermal actuator (2) structure to pass through and to allow the valve (3) to make up-down movement so that a coaxial movement for the valve (3) is provided.

Support hole (32) is a hole which is located around the bottom of valve (3) and is connected to valve (3) by means of tie pieces (33). The support hole (32) guides the thermal elements (22) and engaging tandem thermal actuator (2) structure and valve (3) by enwrapping endpoint of pin of lower thermal element (22). Support hole (32) provides a point of support for the piston (24) of thermal element (22).

Tie pieces (33) are in fact protrusions (211) engaging guiding hole (31), support hole (32) and valve (3) which are protruding from the inner side of valve (3) structure and which are preferably three and placed equiangular.

Spring (4) balances the thermostat assembly (1) with tandem placed thermal actuator (2) and engaged valve (3) such that in case temperature increase, tandem thermal actuator (2) structure starts to push the valve (3) and compresses the spring (4), likewise in case temperature decreases compressed spring (4) starts to push the valve (3) and balances the position of the thermostat assembly (1) with tandem thermal actuator (2) and engaged valve (3). Spring (4) provides remaining force for the valve (3) for upward movement.

During the use of thermal assembly (1); by means of the activation of the thermal elements (22), each piston (24) moves outwardly from each thermal element (22) in an opposite direction with respect to each other and thereby thermal actuator (2) pushes the valve (3) towards the spring (4). Thus, liquid flow has been allowed in the region where the thermal assembly (1) is used.

In the present invention, these engaged thermal elements actuate the valve (3) so that two times longer stroke is provided compared with prior art under the same conditions. In a similar manner, by means of the subject matter product, the same stroke can be obtained at lower temperatures compared with prior art under the same conditions.

The protection scope of the present invention is set forth in the annexed claims and cannot be restricted to the illustrative disclosures given above, under the detailed description.

## Claims

1. A thermal assembly (1) improved for use in the cooling circuits of internal combustion engines and comprising a thermal actuator (2) having at least one thermal element (22) comprising a thermally sensitive component encapsulated inside a vessel, a cover (23) positioned on said vessel and a piston (24) provided in a manner movable outwardly from the inner section of said cover (23), **characterized by** comprising a bushing capsule (21) wherein at least two thermal elements (22) are placed back to back in opposite directions and which at least partially encircles the thermal elements (22) and at least three protrusions (211) embodied in a manner centering the thermal elements (22) on the inner surface of said bushing capsule (21).

2. A thermal assembly (1) according to Claim 1, **characterized in that** said thermal elements (22) are placed into said bushing capsule (21) in a shrink fit manner.

3. A thermal assembly (1) according to Claim 1, **characterized in that** said bushing capsule (21) and said thermal elements (22) directly contact each other.

4. A thermal assembly (1) according to Claim 1, **characterized in that** said thermal elements (22) contact at least three protrusions (211).

5. A thermal assembly (1) according to Claim 1, **characterized in that** said protrusions (211) extend at least along the length of the bushing capsule (21).

6. A thermal assembly (1) according to Claim 1, **characterized by comprising** three gaps (25) defined between the protrusions (211) and the bushing capsule (21) and allowing fluid flow.

7. A thermal assembly (1) according to Claim 1, **characterized by comprising** a valve (3) wherein the thermal actuator (2) is placed and connected to a spring (4) from one side.

8. A thermal assembly (1) according to Claim 7, **characterized by comprising** a guiding hole (31) embodied on said valve (3) and which guides the thermal actuator (2)

9. A thermal assembly (1) according to Claim 7, **characterized by comprising** a support hole (32) embodied on the valve (3) connected to the piston (24) provided on the thermal actuator (2).

10. A thermal assembly (1) according to Claim 7, **characterized by comprising** at least three tie pieces (33) which engage the guiding hole (31), the support hole (32) and the outer surface of the valve (3) to each other.

## Patentansprüche

1. Heizvorrichtung (1) zur Verwendung in Kühlkreisläufen von Verbrennungsmotoren umfassend einen thermischen Stellantrieb (2) mit mindestens einem Thermoelement (22), der mit einem in einem Behälter eingekapselten, wärmeempfindlichen Bauteil versehen ist, einen Deckel (23), der auf dem Behälter angeordnet ist, und einen Kolben (24), der so angeordnet ist, dass er vom Innenbereich des Deckels (23) nach außen hin bewegbar ist, **dadurch gekennzeichnet, dass** die Heizvorrichtung weiterhin ein Buchsengehäuse (21) umfasst, in dem mindestens zwei Thermoelemente (22) in entgegengesetzter Richtung Rücken an Rücken angeordnet sind und das die Thermoelemente (22) zumindest teilweise umgibt, sowie mindestens drei Überstände (211), die so ausgestaltet sind, dass sie die Thermoelemente (22) auf der Innenfläche des Buchsengehäuses (21) mittig ausrichten.

2. Heizvorrichtung (1) nach Anspruch 1, **dadurch gekennzeichnet, dass** die Thermoelemente (22) in das Buchsengehäuse (21) durch Schrumpfpassung eingesetzt werden.

3. Heizvorrichtung (1) nach Anspruch 1, **dadurch gekennzeichnet, dass** das Buchsengehäuse (21) und die Thermoelemente (22) in direktem Kontakt stehen.

4. Heizvorrichtung (1) nach Anspruch 1, **dadurch gekennzeichnet, dass** die Thermoelemente (22) mit mindestens drei Überständen (211) in Kontakt stehen.

5. Heizvorrichtung (1) nach Anspruch 1, **dadurch gekennzeichnet, dass** die Überstände (211) sich mindestens entlang der Länge des Buchsengehäuses (21) erstrecken.

6. Heizvorrichtung (1) nach Anspruch 1, **gekennzeichnet durch** drei Fugen (25), die zwischen den Überständen (211) und dem Buchsengehäuse (21) abgegrenzt sind und eine Flüssigkeitsströmung ermöglichen.

7. Heizvorrichtung (1) nach Anspruch 1, **gekennzeichnet durch** ein Ventil (3), worin der thermische Stellantrieb (2) angeordnet und von einer Seite her mit einer Feder (4) verbunden ist.

8. Heizvorrichtung (1) nach Anspruch 7, **gekennzeichnet durch** eine Führungsbohrung (31), die am Ventil (3) ausgebildet ist und den thermischen Stellantrieb (2) führt.

9. Heizvorrichtung (1) nach Anspruch 7, **gekennzeichnet durch** eine Stützbohrung (32), die am Ventil (3) ausgebildet und mit dem am thermischen Stellantrieb (2) vorgesehenen Kolben (24) verbunden ist.

10. Heizvorrichtung (1) nach Anspruch 7, **gekennzeichnet durch** mindestens drei Verbindungsstücke (33), die die Führungsbohrung (31), die Stützbohrung (32) und die Außenfläche des Ventils (3) miteinander verbinden.

## Revendications

1. Un ensemble thermique (1) amélioré pour une utilisation dans les circuits de refroidissement de moteurs à combustion interne et comprenant un actionneur thermique (2) ayant au moins un élément thermique (22) comprenant un composant thermosensible encapsulé à l'intérieur d'un récipient, un couvercle (23) positionné sur ledit récipient et un piston (24) prévu d'une manière mobile vers l'extérieur à partir de la section intérieure dudit couvercle (23), **caractérisé en ce qu'**il comprend une capsule de traversée (21) dans laquelle au moins deux éléments thermiques (22) sont placés dos à dos dans des directions opposées et qui entoure au moins partiellement les éléments thermiques (22) et au moins trois saillies (211) réalisées de manière à centrer les éléments thermiques (22) sur la surface intérieure de ladite capsule de traversée (21).

2. Un ensemble thermique (1) selon la Revendication 1, **caractérisé en ce que** lesdits éléments thermiques (22) sont placés dans ladite capsule de traversée (21) de manière ajustable par retrait.

3. Un ensemble thermique (1) selon la Revendication 1, **caractérisé en ce que** ladite capsule de traversée (21) et lesdits éléments thermiques (22) sont directement en contact les uns avec les autres.

4. Un ensemble thermique (1) selon la Revendication 1, **caractérisé en ce que** lesdits éléments thermiques (22) sont en contact avec au moins trois saillies (211).

5. Un ensemble thermique (1) selon la Revendication 1, **caractérisé en ce que** lesdites saillies (211) s'étendent au moins sur la longueur de la capsule de traversée (21).

6. Un ensemble thermique (1) selon la Revendication 1, **caractérisé en ce qu'il comprend** trois interstices (25) définis entre les saillies (211) et la capsule de traversée (21) et permettant l'écoulement du fluide.

7. Un ensemble thermique (1) selon la Revendication 1, **caractérisé en ce qu'il comprend une soupape** (3) dans laquelle l'actionneur thermique (2) est placé et connecté à un ressort (4) d'un côté.

8. Un ensemble thermique (1) selon la Revendication 7, **caractérisé en ce qu'il comprend** un trou de guidage (31) réalisé sur ladite soupape (3) et qui guide l'actionneur thermique (2)

9. Un ensemble thermique (1) selon la Revendication 7, **caractérisé en ce qu'il comprend** un trou de support (32) réalisé sur la soupape (3) reliée au piston (24) prévu sur l'actionneur thermique (2).

10. Un ensemble thermique (1) selon la Revendication 7, **caractérisé en ce qu'il comprend** au moins trois attaches (33) engageant le trou de guidage (31), le trou de support (32) et la surface extérieure de la soupape (3) pour l'une et l'autre.
